# EUROPÄISCHE PATENTSCHRIFT

(11) **EP 3 775 017 B1**
(45) Veröffentlichungstag und Bekanntmachung des Hinweises auf die Patenterteilung: **06.11.2024**
(21) Anmeldenummer: 19717770.2
(22) Anmeldetag: 01.04.2019
(51) Int. Cl.: C08K 5/00, C08F 4/50

(54) **BESTIMMTE VERBINDUNGEN ALS BESCHLEUNIGER FÜR IMIN/METALLSALZ-INITIIERTE RADIKALISCHE POLYMERISATION UNGESÄTTIGTER VERBINDUNGEN UND IHRE VERWENDUNG ALS BESCHLEUNIGER**
SPECIFIC COMPOUNDS AS ACCELERATORS FOR IMINE/METAL SALT-INITIATED RADICAL POLYMERIZATION OF UNSATURATED COMPOUNDS AND THE USE THEREOF AS ACCELERATORS
COMPOSÉS SPÉCIFIQUES EN TANT QU'ACCÉLÉRATEURS DESTINÉS À LA POLYMÉRISATION RADICALAIRE INITIÉE PAR UNE IMINE/UN SEL MÉTALLIQUE DE COMPOSÉS INSATURÉS ET LEUR UTILISATION EN TANT QU'ACCÉLÉRATEURS

(30) Priorität: 11.04.2018 DE 102018108539; 29.03.2019 DE 102019108150
(43) Veröffentlichungstag der Anmeldung: 17.02.2021
(73) Patentinhaber: fischerwerke GmbH & Co. KG, 72178 Waldachtal (DE)
(72) Erfinder: WEINELT, Christian, 79331 Teningen (DE); VOGEL, Martin, 79286 Glottertal (DE); GRÜN, Jürgen, 79268 Bötzingen (DE)
(86) Internationale Anmeldenummer: PCT/EP2019/058139
(87) Internationale Veröffentlichungsnummer: WO 2019/197190

(56) Entgegenhaltungen:
- EP-A1- 3 034 520
- EP-A1- 3 299 350
- WO-A1-2016/206777
- US-A1- 2010 101 724

## Beschreibung

Die in den Ansprüchen definierte Erfindung betrifft die Verwendung bestimmter Verbindungen als Beschleuniger und/oder zur Verbesserung der Durchhärtung beispielsweise bei Umgebungs- und/oder insbesondere auch bei tiefen Temperaturen für die radikalische Polymerisation radikalisch polymerisierbarer Verbindungen mittels eines Härtersystems, welches (i) mindestens ein Aldehyd und/ oder Keton und mindestens ein primäres Amin, (ii) mindestens ein Aldimin oder (iii) mindestens ein Ketimin, oder eine Mischung von zwei oder mehr der Bestandteile (i) bis (iii), und mindestens einen weiteren Aktivator (Beschleuniger) in Form eines Metallsalzes, als Initiatorsystem für eine radikalisch polymerisierbare Verbindungen beinhaltende Kunstharzzusammensetzung umfasst, sowie radikalisch härtbare Kunstharzzusammensetzungen, welche eine der bestimmten Verbindungen als Beschleuniger beinhaltet und ein Härtersystem, umfassend (i) mindestens ein Aldehyd und/oder Keton und mindestens ein primäres Amin, (ii) mindestens ein Aldimin oder (iii) mindestens ein Ketimin, oder eine Mischung von zwei oder mehr der Bestandteile (i) bis (iii), und mindestens einen weiteren Aktivator (Beschleuniger) in Form eines Metallsalzes als Initiatorsystem für eine radikalisch polymerisierbare Verbindungen beinhaltende Kunstharzzusammensetzung, wie in Anspruch 13 definiert. Für Referenzzwecke beschreibt die Offenbarung auch radikalisch härtbare Kunstharzzusammensetzungen, insbesondere für Befestigungszwecke, welche die "bestimmten Verbindungen" beinhalten, und deren Verwendung zum Befestigen von Verankerungsmitteln in einer Aussparung, insbesondere einem Bohrloch.

Phenolische und andere Verbindungen finden als Inhibitoren der radikalischen Polymerisation oder als Stabilisatoren Einsatz, siehe z.B. F. Lartigue-Peyrou, Ind. Chem. Library 8, 1996, Seiten 489-505, siehe auch: https://www.sciencedirect.com/science/article/pii/ S0926961496800360.

Mequinol (4-Methoxyhydrochinon) (MeHQ), 2-tert.-Butyl-4-methoxyphenol (BHA), 2,6-Di-tert.-butyl-N,N-dimethylamino-p-cresol, Butylhydroxytoluol (BHT), 2,2'-Methylen-bis(4-methyl-6-tert.-butylphenol), 6,6'-Di-tert.-butyl-4,4'-thio-di-m-cresol und 2-(2-Hydroxyphenyl)-benzotriazol, sowie Stellungsisomere davon, wie sie beispielsweise einzeln oder als Mischungen in industriellen Produkten gegeben sein können, sind bekannte Verbindungen, die als Inhibitoren für radikalisch polymerisierbare Reaktionsharze und/oder als Stabilisatoren ungesättigter Verbindungen bekannt sind.

Saccharin in Form von Eisensaccharinat ist bekannt als Beschleuniger der Polymerisation von Methylmethacrylat, die durch die Redox-Zersetzung von Cumolhydroperoxid initiiert wird (vgl. P. Beaunez et al., Polymer Chemistry 32(8), 1994, 1471-1480 (vgl. beispielsweise http://onlinelibrary.wiley.com/doi/10.1002/pola.1994.080320808/abstract).

WO 2016/206777 A1 zeigt die Verwendung von Aldiminen bzw. Ketiminen und deren Vorstufen als Initiatoren in Härtersystemen für die radikalische Polymerisation und entsprechende Harzzusammensetzungen.

EP 2 034 520 A1 beschreibt ein ATRP-System.

EP 3 299 350 A1 beschreibt einige Verbindungen als Inhibitoren.

US 2010/101724 beschreibt acrylatbasierte Klebstoffzusammensetzungen, aber keine Aldimin/Ketimin-basierten Härtersysteme.

Es wurde nun überraschend gefunden, dass bestimmte Verbindungen, die z.B. schon als Inhibitoren für die radikalische Polymerisation ungesättigter Verbindungen bekannt sind, paradoxerweise als Beschleuniger für durch spezielle Initiatorsysteme initiierte radikalische Polymerisation und/oder zur Verbesserung/Beschleunigung der durch solche Initiatorsysteme initiierten radikalischen Polymerisation insbesondere auch bei Tieftemperaturhärtung wie beispielsweise bei -5 °C geeignet sind. Zu diesen "bestimmten Verbindungen" zählen Phenole, die dadurch gekennzeichnet sind, dass sie pro aromatischem Ring genau eine phenolische OH-Gruppe tragen, in ortho-Position zur OH-Gruppe keinen Alkyloxy-Substituenten aufweisen und keinen Carboxyl (-COOH) Substituenten (auch nicht in Salzform), keinen - CH₂-N(CH₃)₂ und keinen eine -NH-NH- Gruppe umfassenden Substituenten tragen, und insbesondere ausgewählt sind aus der Gruppe, die aus 4-Methoxyphenol, 2-tert.-Butyl-4-methoxyphenol, 2,6-Di-tert.-butyl-N,N-dimethylamino-p-cresol, Butylhydroxytoluol, 2,2'-Methylen-bis(4-methyl-6-tert.-butylphenol), 6,6'-Di-tert.-butyl-4,4'-thio-di-m-cresol, 4,4'-Thiobis(2-tert-butyl-5-methylphenol), 1,3,5-Trimethyl-2.4.6-tris(3,5-di-tert-butyl-4-hydroxybenzyl)benzol, Pentaerythrittetrakis(3-(3,5-di-tert-butyl-4-hydroxyphenyl)propionat), N,N'-Trimethylenebis[3-(3,5-di-tert-butyl-4-hydroxyphenyl)propionamid], butylierten Reaktionsprodukten des p-Cresols (Reaktionsprodukte von 4-Methylphenol mit Dicyclobutadien und Isobuten, CAS-Nr. 68610-51-5), und ferner styrolisiertem Phenol, und Mischungen von zwei oder mehr der genannten Verbindungen, besteht.

Daneben wurden auch (gleich bevorzugt oder ferner) weitere bestimmte Verbindungen gefunden, die in einem System nach WO2016/206777 A1 als Beschleuniger und/oder zur Verbesserung (als Verbesserer) der Aushärtung insbesondere auch bei tiefen Temperaturen (wie -5 °C) wirken.

Diese weiteren bestimmten Verbindungen, die zur Verbesserung/Beschleunigung des Systems nach WO2016/206777 A1 beitragen, sind Triphenylphosphit, Triphenylphosphin, p-Toluolsulfonsäure, N-Isopropyl-N'-phenyl-p-phenylendiamin und (ferner) NH-acide Verbindungen.

Die NH-aciden Verbindungen sind ausgewählt aus der Gruppe bestehend aus:
- Sulfonamiden mit mindestens einem freien H am Amidstickstoffatom (z.B. Toluolsulfonamid),
- heterocyclischen Verbindungen mit einem Ring mit 5 oder 6 Ringatomen, von denen eines das die NH-Acidität begründende wasserstofftragende N (also als -NH-) ist und die übrigen Ringatome aus Kohlenstoff und/oder bis zu einem S ausgewählt sind, wobei die dem "-NH" benachbarten C und/oder S Atome ein oder im Falle von Sein oder vorzugsweise zwei Oxogruppen (=O) tragen (also als -(C=O)-NH-(C=O)- und/oder -(C=O)-NH-(R)- mit R = -S(=O)- oder-S(=O)₂- vorliegen), und die benzokondensiert sein können, wie insbesondere derart charakterisierte Dicarbonsäureamide, z.B. Phthalimid oder Succinimid, Hydantoine, z.B. 5,5-Dimethylhydantoin, cyclische Sulfonamidocarbonylverbindungen, z.B. Saccharin, und
- heterocyclischen aromatischen Verbindungen mit 5 oder 6 Ringatomen, von denen eines das die NH-Azidität begründende wasserstofftragende N (also als -NH-) ist und die übrigen Ringatome aus Kohlenstoff und mindestens zwei weiteren N-Atomen ausgewählt sind, z.B. 1,2,3-Triazol oder 1,2,4-Triazol, 2-(2-Hydroxyphenyl)-benzotriazol oder Tetrazol.

Die "bestimmten Verbindungen", die als Beschleuniger und/oder zur Verbesserung der Durchhärtung eingesetzt werden können und insbesondere aus den vorstehend genannten Verbindungen ausgewählt sind, sind vorzugsweise allgemein solche, die einen pks-Wert kleiner als 13, besonders bevorzugt kleiner als oder gleich 12, und insbesondere bevorzugt kleiner als 11 haben. Die nachfolgende Tabelle zeigt die pks-Werte ausgewählter und in allen Ausführungsformen der Erfindung bevorzugter "bestimmter Verbindungen".

| **Bezeichnung** | **pks** |
|---|---|
| 4-Methoxyhydrochinon | 10,2 |
| 2-tert.-Butyl-4-methoxyphenol (BHA) | 10,6 |
| Butylhydroxytoluol (BHT) | 12,2 |
| styrolisiertes Phenol*¹ | 10,2 - 12 |
| Phthalimid | 8,3 |
| Succinimid | 9,5 |
| 5,5-Dimethylhydantoin | 10,2 |
| 1,2,4-Triazol | 10,2 |
| Benzolsulfonamid | 10,1 |
| Triphenylphosphin*² | 7,6 |
| p-Toluolsulfonsäure | 0,7 |
| Tetrazol | 4,9 |

| | |
|---|---|
| *¹ abhängig vom Substitutionsgrad *² pks der konjugierten Säure (gemessen in Acetonitril) | |

Auch Mischungen von zwei oder mehr der "bestimmten Verbindungen" können erfindungsgemäß verwendet werden.

Vor dem Hintergrund dieser Definitionen (wobei für besondere Ausführungsformen allgemeinere durch oben und nachstehend genannte spezifischere Definitionen ersetzt werden können) betrifft die vorliegende Erfindung insbesondere folgende Erfindungsgegenstände:
In einer ersten Ausführungsform betrifft die vorliegende Erfindung die Verwendung mindestens einer bestimmten Verbindung, ausgewählt aus der Gruppe bestehend aus
(a) Phenolen, die dadurch gekennzeichnet sind, dass sie pro aromatischem Ring genau eine phenolische OH-Gruppe tragen, in ortho-Position zur OH-Gruppe keinen Alkyloxy-Substituenten aufweisen und keinen Carboxyl (-COOH) Substituenten (auch nicht in Salzform), keinen -CH₂-N(CH₃)₂ und keinen eine -NH-NH- Gruppe umfassenden Substituenten tragen,
(b) Triphenylphosphit, Triphenylphosphin, p-Toluolsulfonsäure, N-Isopropyl-N'-phenyl-p-phenylendiamin und
(c) (ferner) NH-aciden Verbindungen, ausgewählt aus Sulfonamiden mit mindestens einem freien H am Amidstickstoffatom; heterocyclischen Verbindungen mit einem Ring mit 5 oder 6 Ringatomen, von denen eines das die NH-Acidität begründende wasserstofftragende -NH- ist und die übrigen Ringatome aus Kohlenstoff und/oder bis zu einem S ausgewählt sind, wobei die dem "-NH" benachbarten C und/oder S Atome ein oder im Falle von Sein oder vorzugsweise zwei Oxogruppen (=O) tragen, wobei die heterocyclischen Verbindungen mit einem Ring als Einzelringe oder benzokondensiert vorliegen können; und heterocyclischen aromatischen Verbindungen mit 5 oder 6 Ringatomen, von denen eines das die NH-Azidität begründende wasserstofftragende N (also als -NH-) ist und die übrigen Ringatome aus Kohlenstoff und mindestens zwei weiteren N-Atomen ausgewählt sind;

insbesondere ausgewählt aus den vor- und nachstehend genannten Verbindungen, die einen pks-Wert kleiner als 13, vorzugsweise kleiner oder gleich 12, insbesondere kleiner als 11 haben;
vorzugsweise im Falle der vorgenannten Gruppe (a) 4-Methoxyphenol, 2-tert.-Butyl-4-methoxyphenol, 2,6-Di-tert.-butyl-N,N-dimethylamino-p-cresol, Butylhydroxytoluol, 2,2'-Methylen-bis(4-methyl-6-tert.-butylphenol), 6,6'-Di-tert.-butyl-4,4'-thio-di-m-cresol, 4,4'-Thiobis(2-tert-butyl-5-methylphenol), 1,3,5-Trimethyl-2.4.6-tris(3,5-di-tert-butyl-4-hydroxybenzyl)benzol, Pentaerythrittetrakis(3-(3,5-di-tert-butyl-4-hydroxyphenyl)propionat), N,N'-Trimethylenebis[3-(3,5-di-tert-butyl-4-hydroxyphenyl)propionamid], butylierten Reaktionsprodukten des p-Cresols; ferner styrolisiertes Phenol,
im Falle der vorgenannten Gruppe (b) p-Toluolsulfonsäure, Triphenylphosphin, Triphenylphosphit oder N-Isopropyl-N'-phenyl-p-phenylendiamin und im Falle der vorgenannten Gruppe (c) Toluolsulfonamid, Phthalimid, Succinimid, 5,5-Dimethylhydantoin, Saccharin, 1,2,3- oder 1,2,4-Triazol, 2-(2-Hydroxyphenyl)-benzotriazol oder Tetrazol;
wobei jeweils auch Mischungen von zwei oder mehr der genannten "bestimmten Verbindungen" verwendet werden können;

in Kombination mit einem Härtersystem als Beschleuniger und/oder zur Verbesserung der Durchhärtung insbesondere auch bei tiefen Temperaturen für radikalische Polymerisationen mittels des Härtersystems, wobei das Härtersystem (i) mindestens ein Aldehyd und/oder Keton und mindestens ein primäres Amin, (ii) mindestens ein Aldimin oder (iii) mindestens ein Ketimin, oder eine Mischung von zwei oder mehr der Bestandteile (i) bis (iii), und mindestens einen weiteren Aktivator (Beschleuniger) in Form eines Metallsalzes, als Initiatorsystem für eine radikalisch polymerisierbare Verbindungen beinhaltende Kunstharzzusammensetzung umfasst.

Vor- und nachstehend gilt für alle Ausführungsformen der Erfindung:
Die Verwendung als Beschleuniger bedeutet insbesondere, dass mit der oder den zugesetzten "bestimmte(n) Verbindung(en)" eine schnellere Aushärtung, insbesondere eine kürzere Gelzeit (Beschreibung des Tests wie in den Beispielen erwähnt) als ohne die bestimmte(n) Verbindung(en) zu finden ist.

Die Verwendung zur Verbesserung der Durchhärtung bei (Umgebungs- und insbesondere) auch tiefen Temperaturen (z.B. -5 °C) bedeutet insbesondere, dass mit der oder den zugesetzten "bestimmte(n) Verbindunge(n)" höhere Auszugswerte als ohne die bestimmte(n) Verbindung(en) zu finden sind, ermittelt mit dem Test wie in den Beispielen verwendet.

In einer zweiten Ausführungsform betrifft die Erfindung eine radikalisch härtbare Kunstharzzusammensetzung, insbesondere für Befestigungszwecke, umfassend einen Beschleuniger und/oder Verbesserer der Durchhärtung und ein Härtersystem, wobei das Härtersystem (i) mindestens ein Aldehyd und/oder Keton und mindestens ein primäres Amin, (ii) mindestens ein Aldimin oder (iii) mindestens ein Ketimin, oder eine Mischung von zwei oder mehr der Bestandteile (i) bis (iii), und mindestens einen weiteren Aktivator (Beschleuniger) in Form eines Metallsalzes als Initiatorsystem für eine radikalisch polymerisierbare Verbindungen beinhaltende Kunstharzzusammensetzung beinhaltet, dadurch gekennzeichnet, dass als Beschleuniger und/oder Verbesserer der Durchhärtung insbesondere bei tiefen Temperaturen mindestens eine bestimmte Verbindung, ausgewählt aus der Gruppe bestehend aus
(a) Phenolen, wie oben für die erste Ausführungsform definiert;
(b) Triphenylphosphit, Triphenylphosphin, p-Toluolsulfonsäure oder N-Isopropyl-N'-phenyl-p-phenylendiamin; und
(c) NH-aciden Verbindungen, wie oben für die erste Ausführungsform der Erfindung definiert;

insbesondere ausgewählt aus den vor- und nachstehend genannten Verbindungen, die einen pks-Wert kleiner als 13, vorzugsweise kleiner oder gleich 12, insbesondere kleiner als 11 haben;
vorzugsweise im Falle der vorgenannten Gruppe (a) ) 4-Methoxyphenol, 2-tert.-Butyl-4-methoxyphenol, 2,6-Di-tert.-butyl-N,N-dimethylamino-p-cresol, Butylhydroxytoluol, 2,2'-Methylen-bis(4-methyl-6-tert.-butylphenol), 6,6'-Di-tert.-butyl-4,4'-thio-di-m-cresol, 4,4'-Thiobis(2-tert-butyl-5-methylphenol), 1,3,5-Trimethyl-2.4.6-tris(3,5-di-tert-butyl-4-hydroxybenzyl)benzol, Pentaerythrittetrakis(3-(3,5-di-tert-butyl-4-hydroxyphenyl)propionat), N,N'-Trimethylenebis[3-(3,5-di-tert-butyl-4-hydroxyphenyl)propionamid], butylierten Reaktionsprodukten des p-Cresols; ferner styrolisiertes Phenol,
im Falle der vorgenannten Gruppe (b) p-Toluolsulfonsäure, Triphenylphosphin, Triphenylphosphit oder N-Isopropyl-N'-phenyl-p-phenylendiamin; und
im Falle der vorgenannten Gruppe (c) Toluolsulfonamid, Phthalimid, Succinimid, 5,5-Dimethylhydantoin, Saccharin, 1,2,3- oder 1,2,4-Triazol, 2-(2-Hydroxyphenyl)-benzotriazol oder Tetrazol;

wobei jeweils auch Mischungen von zwei oder mehr der genannten "bestimmten Verbindungen" verwendet werden können;
beinhaltet ist.

In einer dritten bevorzugten Ausführungsform betrifft die Erfindung die Verwendung mindestens einer bestimmten Verbindung, ausgewählt aus der Gruppe bestehend aus
4-Methoxyphenol, 2-tert.-Butyl-4-methoxyphenol, 2,6-Di-tert.-butyl-N,N-dimethylamino-p-cresol, Butylhydroxytoluol, 2,2'-Methylen-bis(4-methyl-6-tert.-butylphenol), 6,6'-Di-tert.-butyl-4,4'-thio-di-m-cresol, 4,4'-Thiobis(2-tert-butyl-5-methylphenol), 1,3,5-Trimethyl-2.4.6-tris(3,5-di-tert-butyl-4-hydroxybenzyl)benzol, Pentaerythrittetrakis(3-(3,5-di-tert-butyl-4-hydroxyphenyl)propionat), N,N'-Trimethylenebis[3-(3,5-di-tert-butyl-4-hydroxyphenyl)propionamid] und butylierten Reaktionsprodukten des p-Cresols;
insbesondere ausgewählt aus 4-Methoxyphenol, 2-tert.-Butyl-4-methoxyphenol, 2,6-Di-tert.-butyl-N,N-dimethylamino-p-cresol, Butylhydroxytoluol, 2,2'-Methylen-bis(4-methyl-6-tert.-butylphenol), 6,6'-Di-tert.-butyl-4,4'-thio-di-m-cresol und Triphenylphosphin,

in Kombination mit einem Härtersystem als Beschleuniger und/oder zur Verbesserung der Durchhärtung insbesondere bei tiefen Temperaturen für radikalische Polymerisationen, mittels eines Härtersystems, wobei das Härtersystem (i) mindestens ein Aldehyd und/oder Keton und mindestens ein primäres Amin, (ii) mindestens ein Aldimin oder (iii) mindestens ein Ketimin, oder eine Mischung von zwei oder mehr der Bestandteile (i) bis (iii), und mindestens einen weiteren Aktivator (Beschleuniger) in Form eines Metallsalzes, als Initiatorsystem für eine radikalisch polymerisierbare Verbindungen beinhaltende Kunstharzzusammensetzung umfasst.

In einer vierten bevorzugten Ausführungsform der Erfindung betrifft diese die Verwendung mindestens einer bestimmten Verbindung, ausgewählt aus der Gruppe bestehend aus
p-Toluolsulfonsäure, Triphenylphosphin, Triphenylphosphit oder N-Isopropyl-N'-phenyl-p-phenylendiamin, Toluolsulfonamid, Phthalimid, Succinimid, 5,5-Dimethylhydantoin, Saccharin, 1,2,3- oder 1,2,4-Triazol, 2-(2-Hydroxyphenyl)-benzotriazol und Tetrazol,
insbesondere aus Triphenylphosphit, Phthalimid, Saccharin, p-Toluolsulfonsäure, und ferner NH-aziden Verbindungen, insbesondere ausgewählt aus Toluolsulfonamid, Succinimid, 5,5-Dimethylhydantoin, 1,2,3- oder 1,2,4-Triazol, 2-(2-Hydroxyphenyl)-benzotriazol und Tetrazol

in Kombination mit einem Härtersystem zur Verbesserung der Durchhärtung insbesondere bei tiefen Temperaturen für radikalische Polymerisationen mittels eines Härtersystems, wobei das Härtersystem (i) mindestens ein Aldehyd und/oder Keton und mindestens ein primäres Amin, (ii) mindestens ein Aldimin oder (iii) mindestens ein Ketimin, oder eine Mischung von zwei oder mehr der Bestandteile (i) bis (iii), und mindestens einen weiteren Aktivator (Beschleuniger) in Form eines Metallsalzes, als Initiatorsystem für eine radikalisch polymerisierbare Verbindungen beinhaltende Kunstharzzusammensetzung umfasst.

Eine fünfte bevorzugte Ausführungsform der Erfindung betrifft radikalisch härtbare Kunstharzzusammensetzungen, insbesondere für die Befestigungstechnik, welche einen Beschleuniger und/oder Verbesserer der Durchhärtung beinhalten und ein Härtersystem, umfassend (i) mindestens ein Aldehyd und/oder Keton und mindestens ein primäres Amin, (ii) mindestens ein Aldimin oder (iii) mindestens ein Ketimin, oder eine Mischung von zwei oder mehr der Bestandteile (i) bis (iii), und mindestens einen weiteren Aktivator (Beschleuniger) in Form eines Metallsalzes als Initiatorsystem für eine radikalisch polymerisierbare Verbindungen beinhaltende Kunstharzzusammensetzung, dadurch gekennzeichnet, dass als Beschleuniger und/oder Verbesserer der Durchhärtung, insbesondere bei tiefen Temperaturen, mindestens eine bestimmte Verbindung, ausgewählt aus der Gruppe bestehend aus
4-Methoxyphenol, 2-tert.-Butyl-4-methoxyphenol, 2,6-Di-tert.-butyl-N,N-dimethylamino-p-cresol, Butylhydroxytoluol, 2,2'-Methylen-bis(4-methyl-6-tert.-butylphenol), 6,6'-Di-tert.-butyl-4,4'-thio-di-m-cresol, 4,4'-Thiobis(2-tert-butyl-5-methylphenol), 1,3,5-Trimethyl-2.4.6-tris(3,5-di-tert-butyl-4-hydroxybenzyl)benzol, Pentaerythrittetrakis(3-(3,5-di-tert-butyl-4-hydroxyphenyl)propionat), N,N'-Trimethylenebis[3-(3,5-di-tert-butyl-4-hydroxyphenyl)propionamid], butylierten Reaktionsprodukten des p-Cresols; p-Toluolsulfonsäure, Triphenylphosphin, Triphenylphosphit oder N-Isopropyl-N'-phenyl-p-phenylendiamin, Toluolsulfonamid, Phthalimid, Succinimid, 5,5-Dimethylhydantoin, Saccharin, 1,2,3- oder 1,2,4-Triazol, 2-(2-Hydroxyphenyl)-benzotriazol und Tetrazol;
insbesondere aus 4-Methoxyphenol, 2-tert.-Butyl-4-methoxyphenol, 2,6-Di-tert.-butyl-N,N-dimethylamino-p-cresol, Butylhydroxytoluol, 2,2'-Methylen-bis(4-methyl-6-tert.-butylphenol), 6,6'-Di-tert.-butyl-4,4'-thio-di-m-cresol und Triphenylphosphin,
beinhaltet ist.

Eine sechste bevorzugte Ausführungsform der Erfindung betrifft radikalisch härtbare Kunstharzzusammensetzungen, insbesondere für die Befestigungstechnik, welche einen Beschleuniger und/oder Verbesserer der Durchhärtung beinhalten und ein Härtersystem, umfassend (i) mindestens ein Aldehyd und/oder Keton und mindestens ein primäres Amin, (ii) mindestens ein Aldimin oder (iii) mindestens ein Ketimin, oder eine Mischung von zwei oder mehr der Bestandteile (i) bis (iii), und mindestens einen weiteren Aktivator (Beschleuniger) in Form eines Metallsalzes als Initiatorsystem für eine radikalisch polymerisierbare Verbindungen beinhaltende Kunstharzzusammensetzung, dadurch gekennzeichnet, dass als Verbesserer der Durchhärtung, insbesondere bei tiefen Temperaturen, mindestens eine Verbindung, ausgewählt aus der Gruppe bestehend aus
p-Toluolsulfonsäure, Triphenylphosphin, Triphenylphosphit oder N-Ilsopropyl-N'-phenyl-p-phenylendiamin, Toluolsulfonamid, Phthalimid, Succinimid, 5,5-Dimethylhydantoin, Saccharin, 1,2,3- oder 1,2,4-Triazol, 2-(2-Hydroxyphenyl)-benzotriazol und Tetrazol,
vorzugsweise aus Triphenylphosphit, Phthalimid, Saccharin, p-Toluolsulfonsäure, fund ferner NH-aziden Verbindungen, insbesondere ausgewählt aus Toluolsulfonamid, Succinimid, 5,5-Dimethylhydantoin, 1,2,3- oder 1,2,4-Triazol, 2-(2-Hydroxyphenyl)-benzotriazol und Tetrazol,
beinhaltet ist.

Eine siebte bevorzugte Ausführungsform der Erfindung betrifft die Verwendung mindestens einer bestimmten Verbindung, ausgewählt aus der Gruppe bestehend aus 4-Methoxyphenol, 2-tert.-Butyl-4-methoxyphenol, 2,6-Di-tert.-butyl-N,N-dimethylamino-p-cresol, Butylhydroxytoluol, 2,2'-Methylen-bis(4-methyl-6-tert.-butylphenol), 6,6'-Di-tert.-butyl-4,4'-thio-di-m-cresol, 4,4'-Thiobis(2-tert-butyl-5-methylphenol), 1,3,5-Trimethyl-2.4.6-tris(3,5-di-tert-butyl-4-hydroxybenzyl)benzol, Pentaerythrittetrakis(3-(3,5-di-tert-butyl-4-hydroxyphenyl)propionat), N,N'-Trimethylenebis[3-(3,5-di-tert-butyl-4-hydroxyphenyl)propionamid], butylierten Reaktionsprodukten des p-Cresols; p-Toluolsulfonsäure, Triphenylphosphin, Triphenylphosphit oder N-Isopropyl-N'-phenyl-p-phenylendiamin, Toluolsulfonamid, Phthalimid, Succinimid, 5,5-Dimethylhydantoin, Saccharin, 1,2,3- oder 1,2,4-Triazol, 2-(2-Hydroxyphenyl)-benzotriazol und Tetrazol,

insbesondere aus 4-Methoxyhydrochinon, 2-tert.-Butyl-4-methoxyphenol, 2,6-Di-tert.-butyl-N,N-dimethylamino-p-cresol, Butylhydroxytoluol, 2,2'-Methylen-bis(4-methyl-6-tert.-butylphenol), 6,6'-Di-tert.-butyl-4,4'-thio-di-m-cresol und Triphenylphosphin,
im Gemisch mit mindestens einer weiteren bestimmten Verbindung, ausgewählt aus der Gruppe bestehend aus
Triphenylphosphit, Phthalimid, Saccharin, p-Toluolsulfonsäure und NH-aziden Verbindungen, insbesondere ausgewählt aus Toluolsulfonamid, Succinimid, 5,5-Dimethylhydantoin, 1,2,3- oder 1,2,4-Triazol, 2-(2-Hydroxyphenyl)-benzotriazol und Tetrazol,

in Kombination mit einem Härtersystem als Beschleuniger und/oder zur Verbesserung der Durchhärtung insbesondere bei tiefen Temperaturen für radikalische Polymerisationen mittels eines Härtersystems, welches (i) mindestens ein Aldehyd und/oder Keton und mindestens ein primäres Amin, (ii) mindestens ein Aldimin oder (iii) mindestens ein Ketimin, oder eine Mischung von zwei oder mehr der Bestandteile (i) bis (iii), und mindestens einen weiteren Aktivator (Beschleuniger) in Form eines Metallsalzes, als Initiatorsystem für eine radikalisch polymerisierbare Verbindungen beinhaltende Kunstharzzusammensetzung umfasst.

In einer achten bevorzugten Ausführungsform betrifft die Erfindung radikalisch härtbare Kunstharzzusammensetzungen, vorzugsweise für die Befestigungstechnik, welche einen Beschleuniger und/oder Verbesserer der Durchhärtung beinhalten und ein Härtersystem, umfassend (i) mindestens ein Aldehyd und/oder Keton und mindestens ein primäres Amin, (ii) mindestens ein Aldimin oder (iii) mindestens ein Ketimin, oder eine Mischung von zwei oder mehr der Bestandteile (i) bis (iii), und mindestens einen weiteren Aktivator (Beschleuniger) in Form eines Metallsalzes als Initiatorsystem für eine radikalisch polymerisierbare Verbindungen beinhaltende Kunstharzzusammensetzung, dadurch gekennzeichnet, dass als Beschleuniger und/oder Verbesserer der Durchhärtung mindestens eine Verbindung, ausgewählt aus der Gruppe bestehend aus
4-Methoxyphenol, 2-tert.-Butyl-4-methoxyphenol, 2,6-Di-tert.-butyl-N,N-dimethylamino-p-cresol, Butylhydroxytoluol, 2,2'-Methylen-bis(4-methyl-6-tert.-butylphenol), 6,6'-Di-tert.-butyl-4,4'-thio-di-m-cresol, 4,4'-Thiobis(2-tert-butyl-5-methylphenol), 1,3,5-Trimethyl-2.4.6-tris(3,5-di-tert-butyl-4-hydroxybenzyl)benzol, Pentaerythrittetrakis(3-(3,5-di-tert-butyl-4-hydroxyphenyl)propionat), N,N'-Trimethylenebis[3-(3,5-di-tert-butyl-4-hydroxyphenyl)propionamid], butylierten Reaktionsprodukten des p-Cresols; p-Toluolsulfonsäure, Triphenylphosphin, Triphenylphosphit oder N-Isopropyl-N'-phenyl-p-phenylendiamin, Toluolsulfonamid, Phthalimid, Succinimid, 5,5-Dimethylhydantoin, Saccharin, 1,2,3- oder 1,2,4-Triazol, 2-(2-Hydroxyphenyl)-benzotriazol und Tetrazol,
vorzugsweise aus 4-Methoxyhydrochinon, 2-tert.-Butyl-4-methoxyphenol, 2,6-Di-tert.-butyl-N,N-dimethylamino-p-cresol, Butylhydroxytoluol, 2,2'-Methylen-bis(4-methyl-6-tert.-butylphenol), 6,6'-Di-tert.-butyl-4,4'-thio-di-m-cresol und Triphenylphosphin,

im Gemisch mit mindestens einer weiteren Verbindung, ausgewählt aus der Gruppe bestehend aus
Triphenylphosphit, Phthalimid, Saccharin, p-Toluolsulfonsäure und NH-aziden Verbindungen, insbesondere ausgewählt aus Toluolsulfonamid, Succinimid, 5,5-Dimethylhydantoin, 1,2,3- oder 1,2,4-Triazol, 2-(2-Hydroxyphenyl)-benzotriazol und Tetrazol,
beinhaltet ist.

Die vor- und nachstehend verwendeten Begriffe und Merkmale haben vorzugsweise jeweils die nachfolgend genannten Bedeutungen, wobei ein, mehrere oder alle der entsprechenden Begriffe und/oder Merkmale vorzugsweise durch die nachfolgenden Definitionen spezifiziert werden können, was jeweils zur besonderen Ausführungsformen der Erfindungsgegenstände führt, und auch eingangs genannte Definitionen gelten.

Vor- und nachstehend bedeuten Anteils- oder Gehaltsangaben in Prozent jeweils Gewichtsprozent ("Gew.-%") oder den relativen Gewichtsanteil, soweit nicht anders angegeben, bezogen auf alle Inhaltsstoffe einer erfindungsgemäßen bzw. erfindungsgemäß verwendeten Kunstharzzusammensetzung (ohne Verpackungsmaterial), wenn nicht anders angegeben oder ersichtlich.

Im (bevorzugten) Fall einer radikalisch auszuhärtenden (= radikalisch polymerisierbare Verbindungen beinhaltenden) zweikomponentigen Kunstharzzusammensetzung, für die auch die vor- und nachstehenden Verwendungen bevorzugt sind, sind die als Beschleuniger verwendeten "bestimmten Verbindungen" vorzugsweise entweder in der Reaktivharzkomponente oder in der Härterkomponente oder in beiden Komponenten beinhaltet, der Aktivator in Form eines Metallsalzes ist in der Reaktivharzkomponente und/oder insbesondere in der Härterkomponente beinhaltet.

Der Gewichtsanteil von der oder den bestimmten Verbindungen kann in bevorzugten Ausführungsformen der Erfindungsgegenstände bei insgesamt 0,01 bis 20 Gew.-%, insbesondere bei 0,02 bis 10 Gew.-%, vorzugsweise bei 0,05 bis 5 Gew.-% liegen.

"Beinhalten", "enthalten" oder "umfassen" bedeutet, dass neben den genannten Bestandteilen oder Komponenten oder Merkmalen noch andere vorhanden sein können, steht also für eine nicht abschließende Aufzählung, im Gegensatz zu "bestehen aus", dass eine abschließende Aufzählung der bei seiner Verwendung aufgezählten Bestandteile/Komponenten/Merkmale bedeutet. Vorzugsweise kann anstelle von "beinhalten(d)", "enthalten(d)" oder "umfassen(d)" "bestehen(d) aus" eingesetzt werden.

Wo von "mindestens eine(r) Verbindung" oder dergleichen die Rede ist, bedeutet dies, dass eine oder Gemische von zwei oder mehr der danach genannten Verbindungen vorliegen bzw. verwendet werden können.

Wo das Attribut "ferner" erwähnt wird, bedeutet dies, dass Merkmale ohne dieses Attribut stärker bevorzugt sind.

"Und/oder" bedeutet, dass die genannten Merkmale/Substanzen jeweils alleine oder in Kombination von zwei oder mehr der jeweils genannten Merkmale/Substanzen vorliegen können.

Wo von Ausführungsformen der Erfindung die Rede ist, sind die mit höherer Aufzählungsnummer stets als bevorzugte Varianten derjenigen mit kleineren Nummern derselben Erfindungskategorie (Produkt oder Verfahren/Verwendung) anzusehen.

Alle Ausführungsformen der Erfindung beziehen sich insbesondere auf die Verwendung bzw. radikalisch härtbare Kunstharzzusammensetzungen in der Befestigungstechnik, d.h. insbesondere für die Verwendung zur Befestigung von Verankerungselementen, wie Bolzen oder dergleichen, in einer Aussparung oder einem Loch, insbesondere einem Bohrloch, in einem Bausubstrat.

In allen Ausführungsformen der Erfindung ist vorzugsweise auf jeglichen Zusatz (Beimischen) von anderen - als den hier in erfindungsgemäßen Ausführungsformen umfassten - Initiatoren aus dem Stand der Technik, insbesondere Peroxiden als solchen (beispielsweise Alkylhydroperoxiden, Dialkylperoxiden, Peracetalen, Perketalen, Persäuren, Aldehydperoxiden, Ketonperoxiden; Peroxycarbonaten, Peroxyestern, Diacylperoxiden), Aziden, Azoverbindungen (wie AIBN), Tetraazene, für ATRP-typische halogenhaltige Initiatoren und Photoinitiatoren als Radikalstarter verzichtet, d.h. die Erfindungsgegenstände kommen ohne solche Verbindungen aus (sie sind frei davon). Dabei ist nicht ausgeschlossen, dass vereinzelt Peroxide während der Lagerung oder der Reaktion beiläufig entstehen (beispielsweise auch durch Umsetzung mit Luftsauerstoff), doch erfolgt kein aktiver Zusatz "von außen".

Radikalisch härtbar bedeutet in der vorliegenden Offenbarung dasselbe wie radikalisch polymerisierbar.

Erfindungsgemäße oder erfindungsgemäß verwendete Kunstharzsysteme beruhen dabei insbesondere auf den in WO2016/206777 A1 wiedergegebenen, auf die hier Bezug genommen wird und die hier durch Bezugnahme aufgenommen werden. Alle darin genannten Systeme können mit den vorliegend offenbarten bestimmten Verbindungen versehen werden und so ihre Reaktion beschleunigt und/oder bei tieferen Temperaturen besser gehärtet oder nur bei tieferen Temperaturen besser gehärtet werden.

Der Begriff "lmin(e)" wird in der vorliegenden Offenbarung gelegentlich als übergeordneter Begriff anstelle von Aldimine und/oder Ketimine verwendet.

Die als solche zugesetzten oder zur Synthese der Imine geeigneten primären Amine umfassen beispielsweise Mono-, Di- oder Polyamine, oder Mischungen von zwei oder mehr davon. Das Molekülgerüst der Mono- und/oder Di- und/oder Polyamine kann aliphatische, heteroaliphatische, alicyclische, heterocyclische, aromatische, aliphatisch-aromatische und Silan/ Siloxan-Molekülstrukturen oder zwei oder mehr unabhängig ausgewählte davon enthalten. Im Molekül können primäre und/oder sekundäre und tertiäre Aminogruppen vorhanden sein, jedoch muss mindestens eine primäre Aminogruppe (-NH₂), zur Ausbildung eines Aldimins bzw. Ketimins, enthalten sein.

Die Mono-, Di- oder Polyamine sind bevorzugt aus der Gruppe der Alkyl- oder Alkylen(mono oder di)amine (wie z.B.: 2-Methylpentandiamin, oder 2,2,4- oder 2,4,4-Trimethylhexamethylendiamin), der Heteroalkyl- oder Heteroalkylen(mono oder di)amine (wie beispielsweise 1,13-Diamino-4,7,10-trioxatridecan), kommerziell erhältlichen aminfunktionalisierten Polyoxyalkylenen (besonders bevorzugt, z.B. Jeffamine der Firma Huntsman Corp, oder z.B.: Triethylentetramin und/oder höhere Homologe), der Cycloalkyl- oder Cycloalkylen(mono oder di)amine (wie z.B.: Isophorondiamin, 1,3-Bisaminomethylcyclohexan, TCD-Diamin, der Heterocyloalkyl- oder Heterocycloalkylen(mono oder di)amine (wie z.B.: Aminoethylpiperazin), der Aminole bzw. Aminoalkohole (wie z.B. 1,3-Diaminopropan-2-ol), und der aliphatisch-aromatischen(mono oder di)amine (wie 1,3- oder 1,4-Benzoldimethanamin), ausgewählt und/oder aus der Gruppe der aminosilanisierten Füllstoffe.

Weiterhin bevorzugt können die Mono-, Di- oder Polyamine aus der Gruppe der Aminoamide, Polyaminoamide, Mannich-Basen und der Aminaddukte (Epoxid-Amin-Addukte wie beispielsweise in EP 0 387 418 A2 beschrieben, Isocyanat-Amin-Addukte [beispielsweise aus nicht umgesetzten Aminogruppen der Iminsynthese oder aus den oben genannten Aminolen - bei Verwendung der Aminole erfolgt bevorzugt zuerst die Umsetzung zum Imin und im Anschluss die Addition an das Isocyanat], Bucherer-Addukte und Michael-Additions-Addukte) und Aminoalkylsilane, die mindestens eine hydrolysierbare Gruppe, wie Alkoxy, z.B. Methoxy oder Ethoxy - am Silicium gebunden - beinhalten, ausgewählt sein. Bevorzugte Aminoalkylsilane sind beispielsweise ausgewählt aus der Gruppe, die ein oder mehrere der folgenden Verbindungen umfasst: Aminoalkyltri- oder -dialkoxysilane, wie 3-Aminopropyl-trimethoxysilan oder 3-Aminopropyltriethoxysilan, und N-(Aminoalkyl)-amino-alkyltri- oder -dialkoxysilane, wie N-(2-Aminoethyl)-3-aminopropyltrimethoxysilan oder N-(2-Aminoethyl)-3-aminopro-pylmethyldimethoxysilan, ferner Ureidoalkyltrimethoxysilane, wie 3-Ureidopropyltrimethoxysilan.

Bei den als solche zugesetzten oder zur Synthese der Aldimine und/oder Ketimine verwendbaren bzw. geeigneten Aldehyden und Ketonen handelt es sich insbesondere um solche der Formel (II): 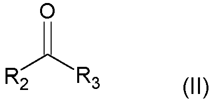 worin R₂, R₃ unabhängig voneinander Wasserstoff und/oder einen unsubstituierten oder substituierten und/oder einen gegebenenfalls Doppelbindungen und/oder Heteroatome aufweisenden ein- oder mehrfach verzweigten oder geradkettigen organischen Rest, welcher aliphatische, heteroaliphatische, alicyclische, heterocyclische Molekülstrukturen und/oder Kombinationen aus den vorgenannten Molekülstrukturen umfassen kann, bedeutet.

Bevorzugte Beispiele derartiger Aldehyde sind Propanal, Valeraldehyd, Isovaleraldehyd, oder Methoxyacetaldehyd, oder 3,7-Dimethyl-6-octenal (Citronellal) oder 3,7-Dimethyl-7-hydroxyoctanal (Hydroxycitronellal). Als derartige Ketone seien hier beispielhaft auch Methylisobutylketon, Aceton, oder Methylethylketon oder 6-Methyl-5-hepten-2-on erwähnt.

Besonders bevorzugt handelt es sich bei den Aldehyden und/oder Ketonen um Verbindungen, welche am zur Carbonylgruppe stehenden α-Kohlenstoffatom eine Doppelbindung und/oder Verzweigung aufweisen, z.B. Isobutyraldehyd (beonders bevorzugt), 2-Ethylhexanal, 2-Methylbutanal, 2-Ethylbutanal, 2-Methylvaleraldehyd, 2,3-Dimethylvaleraldehyd, Cyclohexylcarboxaldehyd, 3,7-Dimethyl-2,6-octadienal (Citral), 3-(4-tert-Butylphenyl)-2-methylpropanal (Lilial, Lysmeral), Tetrahydrofuran-3-carboxaldehyd, Tetrahydro-2-furancarboxaldehyd, 4-Formyltetrahydropyran, Tetrahydro-2H-pyran-2-carbaldehyd oder Tetrahydro-pyran-3-carbaldehyd. Als besonders bevorzugte Ketone seien hier beispielhaft Diisopropylketon, 3-Methyl-2-pentanon, 2-Methylcyclohexanon oder β-Ionone genannt.

Der Gewichtsanteil der Mischungen aus Aldehyden und/oder Ketonen und primären Aminen, und/oder von Aldiminen und/oder Ketiminen liegt vorzugsweise im Bereich von 0,1 bis 40 Gew.-%, z.B. von 0,5 bis 25 Gew.-% oder von 1 bis 20 Gew.-% oder insbesondere von 1 bis 15, beispielsweise 2 bis 12 Gew.-%.

Bei der radikalisch polymerisierbare Verbindungen beinhaltenden Kunstharzzusammensetzung handelt es sich um eine nichtaromatische ungesättigte Gruppen beinhaltende Verbindung, vorzugsweise um ein radikalisch härtendes ungesättigtes Reaktionsharz (Reaktivharz) mit bevorzugt mindestens 2 oder mehr reaktiven nichtaromatischen ungesättigten Bindungen, oder eine Mischung von zwei oder mehr Reaktionsharzen.

Besonders geeignet ist die Gruppe der ethylenisch ungesättigten Verbindungen, die Styrol und Derivate; Vinylester, wie (Meth)Acrylate, Urethan(meth)acrylate oder Itaconate, oder Epoxy(meth)acrylate; ferner ungesättigte Polyester, Vinylether, Allylether, Dicyclopentadien-Verbindungen und ungesättigte Fette, umfasst.

Besonders bevorzugt sind vor allem ein oder mehrere solche Reaktivharze, die (radikalisch) härtbare Ester mit ein oder mehreren ungesättigten Carbonsäureresten (wie beispielsweise in DE 10 2014 103 923 A1 beschrieben) umfassen; vorzugsweise jeweils propoxylierte oder insbesondere ethoxylierte aromatische Diol-, wie Bisphenol-A-, Bisphenol-F- oder Novolak-(insbesondere di-) (meth)acrylate; Epoxy(meth)acrylate, insbesondere in Form von Umsetzungs-produkten von Di- oder Polyepoxiden, z.B. Bisphenol-A-, Bisphenol-F- oder Novolakdi- und/ oder -poly-glycidylethern, mit ungesättigten Carbonsäuren, z.B. C₂-C₇-Alken-carbonsäuren, wie insbesondere (Meth)acrylsäure; Urethan- und/oder Harnstoff(meth)-acrylate - insbesondere Urethan(meth)acrylate, die z.B. durch Umsetzung von Di- und/oder Polyisocyanaten (höherfunktionelle Isocyanate) mit geeigneten (Meth)Acrylverbindungen (wie z.B.: Hydroxyethyl- oder Hydroxypropylmethacrylat), gegebenenfalls unter Mitwirkung von Hydroxyverbindungen, die mindestens zwei Hydroxylgruppen enthalten, wie sie beispielsweise in der DE 39 40 309 A1 und/oder DE 4111828 A1 beschrieben sind, erhalten werden; oder ungesättigte Polyester¬harze, oder dergleichen, oder zwei oder mehr dieser härtbaren ungesättigten organischen Komponenten.

Der Gewichtsanteil dieses oder dieser Reaktivharze liegt vorzugsweise im Bereich von 0,1 bis 90 Gew.-%, z.B. zwischen 0,5 und 75 Gew.-% oder zwischen 1 und 40 Gew.-% oder insbesondere von 15 bis 60, beispielsweise 20 bis 50 Gew.-%.

Die erfindungsgemäßen bzw. nach der erfindungsgemäßen Verwendung erhältlichen Kunstharzzusammensetzungen können weitere Inhaltsstoffe beinhalten.

Wichtige Beispiele für weitere (insbesondere im Befestigungsbereich übliche) Inhaltsstoffe sind Co-Beschleuniger, Inhibitoren, reaktive Verdünner, Thixotropiermittel, Füllstoffe und/oder weitere Additive.

Als Thixotropiermittel können übliche thixotropieverursachende Rheologiehilfsmittel verwendet werden, wie pyrogene Kieselsäure, Bentonite, Alkyl- und Methylcellulosen, Rizinusölderivate oder dergleichen, z.B. in einem Gewichtsanteil von 0,01 bis 50 Gew.-%, beispielsweise von 0,1 bis 5 Gew.-%.

Auch weitere Additive können zugesetzt sein, wie Weichmacher, nicht reaktive Verdünnungsmittel, weitere Silane, Flexibilisatoren, Stabilisatoren, Antistatikmittel, Verdickungsmittel, Härtungskatalysatoren, Rheologiehilfsmittel, Netz- und Dispergiermittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon. Solche Additive können z.B. insgesamt in Gewichtsanteilen von insgesamt 0 bis 90 Gew.-%, beispielsweise von 0 bis 40 Gew.-%, zugesetzt sein. Sie können in einzelnen oder mehreren Komponenten bei Mehrkomponentensystemen in dem Fachmann ersichtlicher und bekannter Weise zugesetzt sein.

Als Reaktivverdünner für radikalisch härtende Reaktionsharze können zusätzlich auch ein oder mehrere niedrigviskose radikalisch polymerisierbare Verbindungen zugesetzt sein, wie beispielsweise (Meth)acrylate, der Formel (H₃C oder H)-C(=CH₂)-C(=O)-OX, worin X ein gegebenenfalls substituierter oder mehrfach substituierter Alkylrest ist, wie (z.B. 2-) Hydroxypropyl(meth)acrylat oder Hydroxyethyl(meth)acrylat, Mono-, Di-, Tri-, Tetra-, Penta-, Hexa- oder poly(meth)acrylate, wie 1,2-Ethandioldi(meth)acrylat, 1,3- oder insbesondere 1,4-Butandioldi(meth)acrylat, Hexandioldi(meth)acrylat, Diethylglykoldi(meth)acrylat, Trimethylol-propantri(meth)acrylat, Glycerintri(meth)acrylat, Polyglycerinpoly(meth)acrylat, Polyethy-lenglykoldi(meth)acrylat, Cycloalkyl-, Bicycloalkyl- oder Heterocycloalkyl(meth)acrylate, wie Tetrahydrofurfuryl(meth)acrylat oder Isobornyl(meth)acrylat, oder Acetoacetoxyalkyl(meth)-acrylat, oder ferner Styrole, wie Styrol, α-Methylstyrol, Vinyltoluol, tert.-Butylstyrol und/oder Divinylbenzol, oder Gemische von zwei oder mehr davon, als mit dem radikalisch härtenden ungesättigten Reaktionsharz parallel aushärtende Bestandteile vorgesehen sein. Der oder die Reaktivverdünner sind beispielsweise in einem Gewichtsanteil von 0,1 bis 90 Gew.-%, z.B. zwischen 0,5 und 60 Gew.-% oder zwischen 1 und 20 Gew.-%, zugesetzt.

Bei den Aktivatoren in Form eines Metallsalzes, was auch Metallkomplexe und Metalloxide einschließt, verwendeten Bestandteile handelt es sich vorzugsweise um ein oder mehrere

Metallsalze insbesondere von organischen und/oder anorganischen Säuren mit Metallen, z.B. ausgewählt aus Kupfer, Eisen, Vanadium, Mangan, Cer, Kobalt, Zirkonium, oder Wismut, oder Gemischen von zwei oder mehr davon. Bevorzugt sind Metallsalze ausgewählt aus der Gruppe , die aus Vanadium, Eisen, Mangan und Kupfer besteht, insbesondere in Form von Salzen oder Komplexen mit anorganischen Säureresten, wie Sulfat- und/oder Carbonat-Resten und/oder organischen Säureresten, beispielsweise Carboxylatresten, - wobei die organischen Säuren vorzugsweise gesättigt sind - wie Carboxylate mit CH₃, C₂-C₂₀-Alkyl, einem C₆-C₂₄-Arylrest oder C₇₋C₃₀-Aralkylrest, beispielsweise Oktoat, z.B. 2-Ethylhexanoat (Isooctanoat), Neodecanoat, oder Acetylacetonat. Besonders bevorzugt sind Mangancarboxylate, wie Mn-acetat oder Mn-octoat, Kupfercarboxylate, wie Kupferoctoat oder Kupfernaphthenat, Kupferchinolate, Eisencarboxylate, wie Eisenoctoat und/oder Vanadiumcarboxylate und/oder die Gruppe der Metallsalze mit anorganischen Säuren, welche beispielsweise Eisenchlorid, Eisensulfat, Kupfersulfat und Kupferchlorid umfasst.

Solche Aktivatoren sind bekannt oder nach an sich bekannten Verfahren herstellbar und liegen vorzugsweise in einem Anteil von 0,01 bis 20, z.B. 0,05 bis 5 Gew.-%, vor.

Füllstoffe können in einer oder bei Mehrkomponentenzusammensetzungen in mehreren Komponenten einer erfindungsgemäßen Kunstharzzusammensetzung, beispielsweise in Form eines Mehrkomponentenkits, enthalten sein. Ihr Anteil beträgt vorzugsweise 0 bis 80 Gew.-%, beispielsweise 5 bis 80, z.B. 40 bis 70 Gew.-%.

Als Füllstoffe finden übliche Füllstoffe, z.B. hydraulisch härtbare Füllstoffe, wie Gips, Branntkalk, Wassergläser oder insbesondere Zemente, wie Portlandzement oder Tonerdeschmelzzemente; mineralische oder mineralähnliche Füllstoffe, wie Kreiden, Sand, Gesteinsmehle, Quarz, Glas, Porzellan, Korund, Keramik, Silikate, Tone, Schwerspat, Aluminiumhydroxid, oder dergleichen, die als Pulver, in körniger Form oder in Form von Formkörpern zugesetzt sein können, Verwendung, oder andere, wie beispielsweise in WO 02/079341 und WO 02/079293 genannt, oder Mischungen von zwei oder mehr davon; wobei die Füllstoffe ferner oder insbesondere auch wie bereits erwähnt oder anderweitig silanisiert sein können.

Die erfindungsgemäßen Kunstharzzusammensetzungen können als Ein- oder vorzugsweise als Mehrkomponentenzusammensetzungen formuliert sein, beispielsweise in Form von Mehrkomponenten- oder insbesondere Zweikomponentenkits (Reaktivharzkomponente und Härterkomponente).

Unter einem Mehrkomponentenkit (oder -set) ist insbesondere ein Zweikomponentenkit (vorzugsweise eine Zwei- oder ferner Mehrkammervorrichtung) zu verstehen, worin die miteinander reaktionsfähigen Bestandteile so beinhaltet sind, dass sie während der Lagerung nicht zu unerwünschten Reaktionen führen können, also in räumlich voneinander getrennten Komponenten vorliegen. Möglich sind Patronen. Besonders geeignet sind Kartuschen mit zwei Komponenten. Bei allen Mehr- oder Zweikomponentenkits kann deren der Inhalt nach oder unter Vermischen seiner Kompontenen nahe oder in der Anwendungsstelle (insbesondere im Falle einer Kartusche mittels eines Statikmischers) in eine Aussparung, vorzugsweise ein Bohrloch in einem Bausubstrat, verbracht werden, um ein Verankerungsmittel, wie einen Bolzen oder dergleichen, darin zu befestigen. Entsprechende Verwendungen sind bevorzugte Erfindungsgegenstände.

Unter Bausubstrat sind z.B. Materialien für Wände, Decken oder Böden im Baubereich zu verstehen, z.B. Mauerwerk, Beton, Holz, Metall oder ferner Kunststoff.

Die Erfindung betrifft die in den unabhängigen und insbesondere in den abhängigen Ansprüchen genannten Erfindungsgegenstände, die hier vorzugsweise als in die Beschreibung durch Bezugnahme aufgenommen anzusehen sind.

### Beispiele:

Die nachfolgenden Beispiele dienen der Illustration der Erfindung.

Die nachfolgend beschriebenen Bestimmungsmethoden für die Ermittlung von Parametern, insbesondere Auszugsversuche und Bestimmungen der Gelzeit, sind auch für den allgemeinen Teil der Beschreibung gültig.

Im Folgenden werden Versuche aufgezeigt, die die beschleunigte und/oder verbesserte Tieftemperaturhärtung bestimmter Phenole belegen:
Hierzu werden einer Basisrezeptur (Referenz, nachfolgend kurz Ref) die jeweiligen bestimmten Verbindungen zugegeben. Die Zugabe beträgt jeweils 2000 ppm bezogen auf die Basisrezeptur. Als Härter wird die nachfolgende Härter-Basisrezeptur verwendet. Das Volumenverhältnis zwischen Basisrezeptur und Härter-Basisrezeptur beträgt 5 : 1.

### Abkürzungen:

| **Abkürzung** | **Bezeichnung** |
|---|---|
| BDDMA | 1,4-Butandioldimethacrylat |
| HPMA | 2-Hydroxypropylmethacrylat |
| SolCop8 | Soligen Copper 8 (Cu-Carboxylat; aktiver Inhalt: 7,8 - 8,2%; OMG Borchers) |

### Basisrezeptur:

Folgende Bestandteile werden für die Basisrezeptur verwendet:

| **Bestandteil** | **Gew.%** |
|---|---|
| Ethoxyliertes Bisphenol-A-Dimethacrylat*¹ | 28,9 |
| BDDMA | 4,1 |
| HPMA | 2,0 |
| Sand | 63,0 |
| Additive | 2,0 |

| | |
|---|---|
| *¹ technisches Produkt - verschiedene Ethoxylierungsgrade möglich. | |

### Härter-Basisrezeptur:

Folgende Bestandteile werden für die Härter-Basisrezeptur verwendet:

| **Bestandteil** | **Gew.%** |
|---|---|
| Aldimin*² | 40,4 |
| SolCop8 | 0,6 |
| Sand | 56,0 |
| Additive | 3,0 |

| | |
|---|---|
| *² Reaktionsprodukt aus Isobutyraldehyd und einem Polyetheramin | |

### Auszugsversuch bei - 5 °C:

Für Auszugsversuche mit Gewindestangen M12 wird, gemäß ETAG 001 PART 5, wie folgt vorgegangen: Zunächst werden Bohrlöcher (Durchmesser 14 mm; Tiefe 95 mm) in einen horizontal liegenden Betonprüfkörper (Betontyp C20/25) mit einem Bohrhammer eingebracht. Die Bohrlöcher werden mit einem Handausbläser und einer Handbürste gereinigt. Im Anschluss wird der Betonprüfkörper auf - 5 °C gekühlt. Nach dem der Betonprüfkörper die gewünschte Temperatur erreicht hat, werden die Bohrlöcher mit der jeweiligen zu prüfenden härtbaren Masse für Befestigungszwecke zu zwei Dritteln befüllt. Je Bohrloch wird eine Gewindestange von Hand eingedrückt. Der Mörtelüberschuss wird mittels eines Spachtels entfernt. Nach 24 Stunden bei - 5 °C wird die Gewindestange gezogen bis zum Versagen unter Messung der Versagenslast. Die zu prüfende Masse für Befestigungszwecke (Kartusche) und die Gewindestange werden für die Tieftemperaturversuche auf + 5 °C temperiert.

### Bestimmung der Gelzeit

Die Bestimmung der Gelzeit erfolgt in einem Kunststoffbecher bei Raumtemperatur mittels manuellen Umrührens. Beim Erreichen des Gelierpunktes wird die zuvor flüssige Probe hochviskos und gelartig, was sich u.a. durch Klumpenbildung bemerkbar macht. Zum Zeitpunkt des Auftretens dieser Phänomene wird die nach dem Beginn der Prüfung gestartete Uhr gestoppt. Die Gelzeit wird direkt abgelesen.

| **Versuch** | **phenol. Verbindung** | **Verbundspannung bei -5°C [N/mm²]** | **Gelzeit [hh:mm:ss]** |
|---|---|---|---|
| Ref | - | 7,7 | 00:07:25 |
| 1 | MeHQ | 10,7 | 00:01:34 |
| 2 | BHA | 11,0 | 00:01:26 |
| 3 | lonol 103 | 15,4 | 00:00:30 |
| 4 | Lowinox Rosin 6 | 15,3 | 00:03:21 |

| | | | |
|---|---|---|---|
| - lonol 103 ist 2,6-Di-tert.-butyl-N,N-dimethylamino-p-cresol (Markenzeichen von Oxiris Chemicals S.A., Spanien). - Lowinox Rosin 6 ist 6,6'-di-tert-butyl-4,4'-thiodi-m-cresol (Markenzeichen von Addivant, USA). | | | |

Sowohl die Gelzeit als auch die ermittelten Verbundspannungen bei - 5 °C belegen die Beschleunigung und die verbesserte Tieftemperaturhärtung der bestimmten (hier phenolischen) Verbindungen.

Analoge Versuche wurden mit Triphenylphosphit (Tppt), Phthalimid und Saccharin durchgeführt:

| **Versuch** | **Verbindung** | **Verbundspannung bei -5°C [N/mm²]** | **Gelzeit [hh:mm:ss]** |
|---|---|---|---|
| 5 | Tppt | 14,2 | 00:05:06 |
| 6 | Phthalimid | 17,3 | 00:05:24 |
| 7 | Saccharin | 16,9 | 00:04:12 |

Hier zeigt sich im Vergleich zu den Werten beim Vergleichsversuch Ref insbesondere eine hohe Verbundspannung bei -5 °C.

Weitere Beispiele für Verbindungen, mit denen eine Verkürzung der Gelzeit und/oder eine bessere Tieftemperaturhärtung gefunden wurde, sind
Butylhydroxytoluol, 2,2'-Methylen-bis(4-methyl-6-tert.-butylphenol), 4,4'-Thiobis(2-tert-butyl-5-methylphenol), 1,3,5-Trimethyl-2.4.6-tris(3,5-di-tert-butyl-4-hydroxybenzyl)benzol, Pentaerythrittetrakis(3-(3,5-di-tert-butyl-4-hydroxyphenyl)propionat), N,N'-Trimethylenebis[3-(3,5-di-tert-butyl-4-hydroxyphenyl)propionamid], butylierten Reaktionsprodukten des p-Cresols; p-Toluolsulfonsäure, Triphenylphosphin, N-Isopropyl-N'-phenyl-p-phenylendiamin, Toluolsulfonamid, Phthalimid, Succinimid, 5,5-Dimethylhydantoin, Saccharin, 1,2,3- oder 1,2,4-Triazol, 2-(2-Hydroxyphenyl)-benzotriazol und Tetrazol.

## Patentansprüche

1. Verwendung mindestens einer bestimmten Verbindung, ausgewählt aus der Gruppe bestehend aus
(a) Phenolen, die **dadurch gekennzeichnet sind, dass** sie pro aromatischem Ring genau eine phenolische OH-Gruppe tragen, in ortho-Position zur OH-Gruppe keinen Alkyloxy-Substituenten aufweisen und keinen Carboxyl in freier oder anionischer Form, keinen -CH₂-N(CH₃)₂ und keinen eine -NH-NH- Gruppe umfassenden Substituenten tragen,
(b) Triphenylphosphit, Triphenylphosphin, p-Toluolsulfonsäure oder N-Isopropyl-N'-phenyl-p-phenylendiamin und
(c) NH-aciden Verbindungen, ausgewählt aus Sulfonamiden mit mindestens einem freien H am Amidstickstoffatom; heterocyclischen Verbindungen mit einem Ring mit 5 oder 6 Ringatomen, von denen eines das die NH-Acidität begründende wasserstofftragende -NHist und die übrigen Ringatome aus Kohlenstoff und/oder bis zu einem S ausgewählt sind, wobei die dem "-NH" benachbarten C und/oder S Atome ein oder im Falle von S ein oder vorzugsweise zwei Oxogruppen (=O) tragen, wobei die heterocyclischen Verbindungen mit einem Ring als Einzelringe oder benzokondensiert vorliegen können; und heterocyclischen aromatischen Verbindungen mit 5 oder 6 Ringatomen, von denen eines das die NH-Azidität begründende wasserstofftragende N ist und die übrigen Ringatome aus Kohlenstoff und mindestens zwei weiteren N-Atomen ausgewählt sind;
wobei jeweils auch Mischungen von zwei oder mehr der genannten "bestimmten Verbindungen" verwendet werden können;
in Kombination mit einem Härtersystem als Beschleuniger und/oder zur Verbesserung der Durchhärtung insbesondere auch bei tiefen Temperaturen für radikalische Polymerisationen mittels des Härtersystems, wobei das Härtersystem (i) mindestens ein Aldehyd und/oder Keton und mindestens ein primäres Amin, (ii) mindestens ein Aldimin oder (iii) mindestens ein Ketimin, oder eine Mischung von zwei oder mehr der Bestandteile (i) bis (iii), und mindestens einen weiteren Aktivator (Beschleuniger) in Form eines Metallsalzes, als Initiatorsystem für eine radikalisch polymerisierbare Verbindungen beinhaltende Kunstharzzusammensetzung umfasst.

2. Verwendung nach Anspruch 1, wobei die Verwendung in einer zweikomponentigen radikalisch polymerisierbaren Kunstharzzusammensetzung, insbesondere für die Befestigungstechnik, erfolgt, und wobei die bestimmte Verbindung entweder in einer Reaktivharzkomponente und/oder in einer Härterkomponenten beinhaltet ist, und auch der Aktivator in Form eines Metallsalzes in einer der beiden oder beiden der genannten Komponenten beinhaltet ist.

3. Verwendung nach Anspruch 1 oder 2, **dadurch gekennzeichnet, dass** die mindestens eine bestimmte Verbindung aus der Gruppe bestehend aus
im Falle der Gruppe (a) 4-Methoxyphenol, 2-tert.-Butyl-4-methoxyphenol, 2,6-Di-tert.-butyl-N,N-dimethylamino-p-cresol, Butylhydroxytoluol, 2,2'-Methylen-bis(4-methyl-6-tert.-butylphenol), 6,6'-Di-tert.-butyl-4,4'-thio-di-m-cresol, 4,4'-Thiobis(2-tert-butyl-5-methylphenol), 1,3,5-Trimethyl-2.4.6-tris(3,5-di-tert-butyl-4-hydroxybenzyl)benzol, Pentaerythrittetrakis(3-(3,5-di-tert-butyl-4-hydroxyphenyl)propionat), N,N'-Trimethylenebis[3-(3,5-di-tert-butyl-4-hydroxyphenyl)propionamid], butylierten Reaktionsprodukten des p-Cresols; ferner styrolisiertem Phenol,
im Falle der vorgenannten Gruppe (b) p-Toluolsulfonsäure, Triphenylphosphin, Triphenylphosphit oder N-Isopropyl-N'-phenyl-p-phenylendiaminund im Falle der vorgenannten Gruppe (c) Toluolsulfonamid, Phthalimid, Succinimid, 5,5-Dimethylhydantoin, Saccharin, 1,2,3- oder 1,2,4-Triazol, 2-(2-Hydroxyphenyl)-benzotriazol und Tetrazol;
oder einer Mischung von zwei oder mehr dieser Verbindungen, ausgewählt ist.

4. Verwendung nach Anspruch 1 oder 2, **dadurch gekennzeichnet, dass** die mindestens eine bestimmte Verbindung aus der Gruppe bestehend aus p-Toluolsulfonsäure, Triphenylphosphin, Triphenylphosphit, N-Isopropyl-N'-phenyl-p-phenylendiamin und Toluolsulfonamid, Phthalimid, Succinimid, 5,5-Dimethylhydantoin, Saccharin, 1,2,3- oder 1,2,4-Triazol, 2-(2-Hydroxyphenyl)-benzotriazol und Tetrazol;
ausgewählt ist und die Verwendung zur Verbesserung der Durchhärtung insbesondere bei tiefen Temperaturen für radikalische Polymerisationen erfolgt.

5. Verwendung nach Anspruch 1 oder 2, **dadurch gekennzeichnet, dass** die mindestens eine bestimmte Verbindung aus
4-Methoxyphenol, 2-tert.-Butyl-4-methoxyphenol, 2,6-Di-tert.-butyl-N,N-dimethylamino-p-cresol, Butylhydroxytoluol, 2,2'-Methylen-bis(4-methyl-6-tert.-butylphenol), 6,6'-Di-tert.-butyl-4,4'-thio-di-m-cresol, 4,4'-Thiobis(2-tert-butyl-5-methylphenol), 1,3,5-Trimethyl-2.4.6-tris(3,5-di-tert-butyl-4-hydroxybenzyl)benzol, Pentaerythrittetrakis(3-(3,5-di-tert-butyl-4-hydroxyphenyl)propionat), N,N'-Trimethylenebis[3-(3,5-di-tert-butyl-4-hydroxyphenyl)propionamid], butylierten Reaktionsprodukten des p-Cresols; und Triphenylphosphin ausgewählt ist und die Verwendung als Beschleuniger und/oder zur Verbesserung der Durchhärtung insbesondere bei tiefen Temperaturen für radikalische Polymerisationen erfolgt.

6. Verwendung nach einem der Ansprüche 1 bis 5 **dadurch gekennzeichnet, dass** die mindestens eine bestimmte Verbindung ausgewählt aus solchen ist, deren pks-Wert kleiner als 13, besonders bevorzugt kleiner als oder gleich 12, und insbesondere bevorzugt kleiner als 11 ist.

7. Verwendung nach einem der Ansprüche 1 bis 6, **dadurch gekennzeichnet, dass**, bezogen auf die Gesamtmasse der radikalisch polymerisierbaren Kunstharzzusammensetzung, der Gewichtsanteil von der oder den bestimmten Verbindungen bei insgesamt 0,01 bis 20 Gew.-%, insbesondere bei 0,02 bis 10 Gew.-%, vorzugsweise bei 0,05 bis 5 Gew.-% liegt.

8. Verwendung nach einem der Ansprüche 1 bis 7, **dadurch gekennzeichnet, dass**, bezogen auf die Gesamtmasse der radikalisch polymerisierbaren Kunstharzzusammensetzung, der Gewichtsanteil der Mischungen aus Aldehyden und/oder Ketonen und primären Aminen, und/oder von Aldiminen und/oder Ketiminen im Bereich von 0,1 bis 40 Gew.-%, vorzugsweise von 0,5 bis 25 Gew.-%, insbesondere von 1 bis 20 Gew.-%, vor allem von 1 bis 15, in erster Linie von 2 bis 12 Gew.-%, liegt.

9. Verwendung nach einem der Ansprüche 1 bis 8, **dadurch gekennzeichnet, dass**, bezogen auf die Gesamtmasse der radikalisch polymerisierbaren Kunstharzzusammensetzung, der oder die Aktivatoren in Form eines Metallsalzes in einem Gewichtsanteil von 0,01 Gew-%, vorzugsweise von 0,05 bis 5 Gew-%, vorliegen.

10. Verwendung nach einem der Ansprüche 1 bis 9, **dadurch gekennzeichnet, dass**, bezogen auf die Gesamtmasse der radikalisch polymerisierbaren Kunstharzzusammensetzung, der Gewichtsanteil an Reaktivharz oder Reaktivharzen in der radikalisch polymerisierbaren Kunstharzzusammensetzung im Bereich von 0,1 bis 90 Gew.-%, vorzugsweise von 0,5 bis 75 Gew.-%, stärker bevorzugt von 1 bis 40 Gew.-%, vor allem von 15 bis 60, in erster Linie von 20 bis 50 Gew.-% beträgt.

11. Verwendung nach einem der Ansprüche 1 bis 10, **dadurch gekennzeichnet, dass** der Kunstharzzusammensetzung Reaktivverdünner und/oder ein oder mehrere weitere übliche Inhaltsstoffe, insbesondere Co-Beschleuniger, Inhibitoren, Thixotropiermittel, Füllstoffe oder weitere Additive zugesetzt sind oder werden.

12. Verwendung nach einem der Ansprüche 1 bis 11, wobei es sich bei der radikalisch härtbaren Kunstharzzusammensetzung um ein Mehr-, insbesondere ein Zweikomponentenkit handelt, das eine Reaktivharzkomponente und eine Härterkomponente beinhaltet.

13. Radikalisch härtbare Kunstharzzusammensetzungen, welche einen Beschleuniger und/ oder Verbesserer der Durchhärtung beinhalten und ein Härtersystem, wobei das Härtersystems (i) mindestens ein Aldehyd und/oder Keton und mindestens ein primäres Amin, (ii) mindestens ein Aldimin oder (iii) mindestens ein Ketimin, oder eine Mischung von zwei oder mehr der Bestandteile (i) bis (iii), und mindestens einen weiteren Aktivator (Beschleuniger) in Form eines Metallsalzes als Initiatorsystem für eine radikalisch polymerisierbare Verbindungen beinhaltende Kunstharzzusammensetzung beinhaltet, **dadurch gekennzeichnet, dass** als Beschleuniger und/oder Verbesserer der Durchhärtung mindestens eine bestimmte Verbindung, ausgewählt aus der Gruppe bestehend aus
(a) Phenolen, die **dadurch gekennzeichnet sind, dass** sie pro aromatischem Ring genau eine phenolische OH-Gruppe tragen, in ortho-Position zur OH-Gruppe keinen Alkyloxy-Substituenten aufweisen und keinen Carboxyl in freier oder anionischer Form, keinen -CH₂-N(CH₃)₂ und keinen eine -NH-NH- Gruppe umfassenden Substituenten tragen,
(b) Triphenylphosphit, Triphenylphosphin, p-Toluolsulfonsäure oder , N-Isopropyl-N'-phenyl-p-phenylendiamin und
(c) NH-aciden Verbindungen, ausgewählt aus Sulfonamiden mit mindestens einem freien H am Amidstickstoffatom; heterocyclischen Verbindungen mit einem Ring mit 5 oder 6 Ringatomen, von denen eines das die NH-Acidität begründende wasserstofftragende -NHist und die übrigen Ringatome aus Kohlenstoff und/oder bis zu einem S ausgewählt sind, wobei die dem "-NH" benachbarten C und/oder S Atome ein oder im Falle von S ein oder vorzugsweise zwei Oxogruppen (=O) tragen, wobei die heterocyclischen Verbindungen mit einem Ring als Einzelringe oder benzokondensiert vorliegen können; und heterocyclischen aromatischen Verbindungen mit 5 oder 6 Ringatomen, von denen eines das die NH-Azidität begründende wasserstofftragende N ist und die übrigen Ringatome aus Kohlenstoff und mindestens zwei weiteren N-Atomen ausgewählt sind;
wobei jeweils auch Mischungen von zwei oder mehr der genannten "bestimmten Verbindungen" verwendet werden können;
beinhaltet ist.

## Claims

1. Use of at least one specific compound selected from the group consisting of
(a) phenols, which are **characterized in that** they bear precisely one phenolic OH group per aromatic ring, have no alkyloxy substituents in the ortho position to the OH group, and bear no carboxyl in free or anionic form, no -CH₂-N(CH₃)₂, and no substituents comprising an -NH-NH- group,
(b) triphenyl phosphite, triphenylphosphine, p-toluenesulfonic acid or N-isopropyl-N'-phenyl-p-phenylenediamine, and
(c) NH-acidic compounds selected from sulfonamides having at least one free H on the amide nitrogen atom; heterocyclic compounds having a ring containing 5 or 6 ring atoms, one of which is the hydrogen-bearing -NH- which establishes the NH acidity and the remaining ring atoms are selected from carbon and/or up to one S, wherein the C and/or S atoms adjacent to the "-NH" bear one or, in the case of S, one or preferably two, oxo groups (=O), wherein the heterocyclic compounds having a ring can be present as single rings or be benzo-fused; and heterocyclic aromatic compounds having 5 or 6 ring atoms, one of which is the hydrogen-bearing N which establishes the NH acidity and the remaining ring atoms are selected from carbon and at least two further N atoms;
it being possible to also use mixtures of two or more of said "specific compounds";
in combination with a curing agent system as an accelerator and/or for improving full curing, in particular even at low temperatures for radical polymerizations by means of the curing agent system, wherein the curing agent system comprises (i) at least one aldehyde and/or ketone and at least one primary amine, (ii) at least one aldimine, or (iii) at least one ketimine, or a mixture of two or more of constituents (i) to (iii), and at least one further activator (accelerator) in the form of a metal salt, as an initiator system for a synthetic resin composition containing radically polymerizable compounds.

2. Use according to claim 1, wherein the use is in a two-component radically polymerizable synthetic resin composition, in particular for fastening technology, and wherein the specific compound is contained either in a reactive resin component and/or in a curing agent component, and the activator in the form of a metal salt is also contained in one or both of said two components.

3. Use according to either claim 1 or claim 2, **characterized in that** the at least one specific compound is selected from the group consisting of
in the case of group (a): 4-methoxyphenol, 2-tert-butyl-4-methoxyphenol, 2,6-di-tert-butyl-N,N-dimethylamino-p-cresol, butylhydroxytoluene, 2,2'-methylenebis(4-methyl-6-tert-butylphenol), 6,6'-di-tert-butyl-4,4'-thio-di-m-cresol, 4,4'-thiobis(2-tert-butyl-5-methylphenol), 1,3,5-trimethyl-2,4,6-tris(3,5-di-tert-butyl-4-hydroxybenzyl)benzene, pentaerythritol tetrakis(3-(3,5-di-tert-butyl-4-hydroxyphenyl)propionate), N,N'-trimethylenebis[3-(3,5-di-tert-butyl-4-hydroxyphenyl)propionamide], butylated reaction products of p-cresol; further styrenated phenol,
in the case of the aforementioned group (b): p-toluenesulfonic acid, triphenylphosphine, triphenylphosphite or N-isopropyl-N'-phenyl-p-phenylenediamine, and
in the case of the aforementioned group (c): toluenesulfonamide, phthalimide, succinimide, 5,5-dimethylhydantoin, saccharin, 1,2,3- or 1,2,4-triazole, 2-(2-hydroxyphenyl)benzotriazole and tetrazole;
or a mixture of two or more of these compounds.

4. Use according to either claim 1 or claim 2, **characterized in that** the at least one specific compound is selected from the group consisting of p-toluenesulfonic acid, triphenylphosphine, triphenylphosphite, N-isopropyl-N'-phenyl-p-phenylenediamine and toluenesulfonamide, phthalimide, succinimide, 5,5-dimethylhydantoin, saccharin, 1,2,3- or 1,2,4-triazole, 2-(2-hydroxyphenyl)benzotriazole and tetrazole;
and the use is to improve full curing, in particular at low temperatures for radical polymerizations.

5. Use according to either claim 1 or claim 2, **characterized in that** the at least one specific compound is
selected from 4-methoxyphenol, 2-tert-butyl-4-methoxyphenol, 2,6-di-tert-butyl-N,N-dimethylamino-p-cresol, butylhydroxytoluene, 2,2'-methylenebis(4-methyl-6-tert-butylphenol), 6,6'-di-tert-butyl-4,4'-thio-di-m-cresol, 4,4'-thiobis(2-tert-butyl-5-methylphenol), 1,3,5-trimethyl-2,4,6-tris(3,5-di-tert-butyl-4-hydroxybenzyl)benzene, pentaerythritol tetrakis(3-(3,5-di-tert-butyl-4-hydroxyphenyl)propionate), N,N'-trimethylenebis[3-(3,5-di-tert-butyl-4-hydroxyphenyl)propionamide], butylated reaction products of p-cresol; and triphenylphosphine, and the use is as an accelerator and/or for improving full curing, in particular at low temperatures for radical polymerizations.

6. Use according to any of claims 1 to 5, **characterized in that** the at least one specific compound is selected from those having a pKa value of less than 13, particularly preferably less than or equal to 12, and in particular preferably less than 11.

7. Use according to any of claims 1 to 6, **characterized in that,** relative to the total mass of the radically polymerizable synthetic resin composition, the proportion by weight of the specific compound(s) is in total 0.01 to 20 wt.%, in particular 0.02 to 10 wt.%, preferably 0.05 to 5 wt.%.

8. Use according to any of claims 1 to 7, **characterized in that,** relative to the total mass of the radically polymerizable synthetic resin composition, the proportion by weight of the mixtures of aldehydes and/or ketones and primary amines, and/or of aldimines and/or ketimines, is in the range from 0.1 to 40 wt.%, preferably from 0.5 to 25 wt.%, in particular from 1 to 20 wt.%, in particular from 1 to 15, primarily from 2 to 12 wt.%.

9. Use according to any of claims 1 to 8, **characterized in that,** relative to the total mass of the radically polymerizable synthetic resin composition, the activator(s) in the form of a metal salt is/are present in a proportion by weight of 0.01 wt.%, preferably from 0.05 to 5 wt.%.

10. Use according to any of claims 1 to 9, **characterized in that,** relative to the total mass of the radically polymerizable synthetic resin composition, the proportion by weight of reactive resin(s) in the radically polymerizable synthetic resin composition is in the range from 0.1 to 90 wt.%, preferably from 0.5 to 75 wt.%, more preferably from 1 to 40 wt.%, especially from 15 to 60, primarily from 20 to 50 wt.%.

11. Use according to any of claims 1 to 10, **characterized in that** reactive diluents and/or one or more further customary ingredients, in particular co-accelerators, inhibitors, thixotropic agents, fillers or other additives, are added to the synthetic resin composition.

12. Use according to any of claims 1 to 11, wherein the radically curable synthetic resin composition is a multi-component, in particular a two-component, kit which contains a reactive resin component and a curing agent component.

13. Radically curable synthetic resin compositions which contain an accelerator and/or improver of full curing and a curing agent system, wherein the curing agent system contains (i) at least one aldehyde and/or ketone and at least one primary amine, (ii) at least one aldimine, or (iii) at least one ketimine, or a mixture of two or more of constituents (i) to (iii), and at least one further activator (accelerator) in the form of a metal salt as an initiator system for a synthetic resin composition containing radically polymerizable compounds, **characterized in that** at least one specific compound is present as an accelerator and/or improver of full curing, said compound being selected from the group consisting of
(a) phenols, which are **characterized in that** they bear precisely one phenolic OH group per aromatic ring, have no alkyloxy substituents in the ortho position to the OH group, and bear no carboxyl in free or anionic form, no -CH₂-N(CH₃)₂, and no substituents comprising an -NH-NH- group,
(b) triphenyl phosphite, triphenylphosphine, p-toluenesulfonic acid or N-isopropyl-N'-phenyl-p-phenylenediamine, and
(c) NH-acidic compounds selected from sulfonamides having at least one free H on the amide nitrogen atom; heterocyclic compounds having a ring containing 5 or 6 ring atoms, one of which is the hydrogen-bearing -NH- which establishes the NH acidity and the remaining ring atoms are selected from carbon and/or up to one S, wherein the C and/or S atoms adjacent to the "-NH" bear one or, in the case of S, one or preferably two, oxo groups (=O), wherein the heterocyclic compounds having a ring can be present as single rings or be benzo-fused; and heterocyclic aromatic compounds having 5 or 6 ring atoms, one of which is the hydrogen-bearing N which establishes the NH acidity and the remaining ring atoms are selected from carbon and at least two further N atoms;
it being possible to also use mixtures of two or more of said "specific compounds";

## Revendications

1. Utilisation d'au moins un composé spécifique choisi dans le groupe constitué par
(a) des phénols, qui sont **caractérisés en ce qu'**ils portent exactement un groupe OH phénolique par cycle aromatique, ne présentent aucun substituant alkyloxy en position ortho par rapport au groupe OH et ne portent aucun carboxyle sous forme libre ou anionique, aucun -CH₂-N(CH₃)₂ et aucun substituant comprenant un groupe -NH-NH-,
(b) le triphénylephosphite, triphénylphosphine, acide p-toluènesulfonique ou N-isopropyl-N'-phényl-p-phénylènediamine ; et
(c) des composés NH-acides choisis parmi des sulfonamides comportant au moins un H libre sur l'atome d'azote d'amide ; des composés hétérocycliques comportant un cycle à 5 ou 6 atomes cycliques, dont l'un est le -NH- portant l'hydrogène et causant l'acidité NH, et les autres atomes cycliques sont choisis parmi le carbone et/ou jusqu'à un S, dans laquelle les atomes de C et/ou de S voisins du « -NH » portent un ou, dans le cas de S, un ou de préférence deux groupes oxo (=O), dans laquelle les composés hétérocycliques comportant un cycle peuvent se présenter sous forme de cycles simples ou sous forme benzocondensée ; et des composés aromatiques hétérocycliques comportant 5 ou 6 atomes cycliques, dont l'un est le N portant l'hydrogène et causant l'acidité NH et dont les autres atomes cycliques sont choisis parmi le carbone et au moins deux autres atomes N ;
dans laquelle des mélanges de deux ou plus desdits « composés spécifiques » peuvent également être utilisés respectivement ;
en combinaison avec un système durcisseur comme accélérateur et/ou pour améliorer le durcissement à coeur, en particulier également à basses températures, pour des polymérisations radicalaires à l'aide du système durcisseur, dans laquelle le système durcisseur comprend (i) au moins un aldéhyde et/ou une cétone et au moins une amine primaire, (ii) au moins une aldimine ou (iii) au moins une cétimine, ou un mélange de deux ou plus des composants (i) à (iii), et au moins un autre activateur (accélérateur) sous la forme d'un sel métallique, comme système initiateur pour une composition de résine synthétique contenant des composés polymérisables par voie radicalaire.

2. Utilisation selon la revendication 1, dans laquelle l'utilisation se fait dans une composition de résine synthétique à deux composants et polymérisable par voie radicalaire, en particulier pour la technique de fixation, et dans laquelle le composé spécifique est contenu dans un composant de résine réactive et/ou dans un composant durcisseur, et l'activateur également est contenu sous la forme d'un sel métallique dans l'un des deux ou dans les deux composants mentionnés.

3. Utilisation selon la revendication 1 ou 2, **caractérisée en ce que** l'au moins un composé spécifique est choisi dans le groupe constitué,
dans le cas du groupe (a), par 4-méthoxyphénol, 2-tert-butyl-4-méthoxyphénol, 2,6-di-tert-butyl-N,N-diméthylamino-p-crésol, butylhydroxytoluène, 2,2'-méthylène-bis(4-méthyl-6-tert-butylphénol), 6,6'-di-tert-butyl-4,4'-thio-di-m-crésol, 4,4`-thiobis(2-tert-butyl-5-méthylphénol), 1,3,5-triméthyl-2.4.6-tris(3,5-di-tert-butyl-4-hydroxybenzyl)benzène, tétrakis(3-(3,5-di-tert-butyl-4-hydroxyphényl)propionamide) de pentaérythritol, N,N`-triméthylènebis[3-(3,5-di-tert-butyl-4-hydroxyphényl)propionamide], produits de réaction butylés du p-crésol ; ainsi que phénol styrolisé,
dans le cas du groupe (b) ci-dessus, par acide p-toluènesulfonique, triphénylphosphine, triphénylphosphite ou N-isopropyl-N`-phényl-p-phénylènediamine, et
dans le cas du groupe (c) ci-dessus, toluènesulfonamide, phtalimide, succinimide, 5,5-diméthylhydantoïne, saccharine, 1,2,3- ou 1,2,4-triazole, 2-(2-hydroxyphényl)-benzotriazole et tétrazole ;
ou par un mélange de deux ou plus de ces composés.

4. Utilisation selon la revendication 1 ou 2, **caractérisée en ce que** l'au moins un composé spécifique est choisi dans le groupe constitué par acide p-toluènesulfonique, triphénylphosphine, triphénylephosphite, N-isopropyl-N`-phényl-p-phénylènediamine et toluènesulfonamide, phtalimide, succinimide, 5,5-diméthylhydantoïne, saccharine, 1,2,3- ou 1,2,4-triazole, 2-(2-hydroxyphényl)-benzotriazole et tétrazole ;
et l'utilisation est faite pour améliorer le durcissement à coeur, en particulier à basses températures, pour des polymérisations radicalaires.

5. Utilisation selon la revendication 1 ou 2, **caractérisée en ce que** l'au moins un composé spécifique est constitué par
4-méthoxyphénol, 2-tert-butyl-4-méthoxyphénol, 2,6-di-tert-butyl-N,N-diméthylamino-p-crésol, butylhydroxytoluène, 2,2'-méthylène-bis(4-méthyl-6-tert-butylphénol), 6,6'-di-tert-butyl-4,4'-thio-di-m-crésol, 4,4`-thiobis(2-tert-butyl-5-méthylphénol), 1,3,5-triméthyl-2.4.6-tris(3,5-di-tert-butyl-4-hydroxybenzyl)benzène, tétrakis(3-(3,5-di-tert-butyl-4-hydroxyphényl)propionate) de pentaérythritol, N,N'-triméthylènebis[3-(3,5-di-tert-butyl-4-hydroxyphényl)propionamide], produits de réaction butylés du p-crésol ; et triphénylphosphine, et l'utilisation se fait en tant qu'accélérateur et/ou pour améliorer le durcissement à coeur, en particulier à basses températures, pour des polymérisations radicalaires.

6. Utilisation selon l'une des revendications 1 à 5, **caractérisée en ce que** l'au moins un composé spécifique est choisi parmi ceux dont la valeur pKs est inférieure à 13, plus préférablement inférieure ou égale à 12, et de manière particulièrement préférée inférieure à 11.

7. Utilisation selon l'une des revendications 1 à 6, **caractérisée en ce que,** par rapport à la masse totale de la composition de résine synthétique polymérisable par voie radicalaire, la proportion en poids du ou des composés spécifiques est au total de 0,01 à 20 % en poids, en particulier de 0,02 à 10 % en poids, de préférence de 0,05 à 5 % en poids.

8. Utilisation selon l'une des revendications 1 à 7, **caractérisée en ce que,** par rapport à la masse totale de la composition de résine synthétique polymérisable par voie radicalaire, la proportion en poids des mélanges d'aldéhydes et/ou de cétones et d'amines primaires, et/ou d'aldimines et/ou de cétimines se situe dans la plage allant de 0,1 à 40 % en poids, de préférence de 0,5 à 25 % en poids, en particulier de 1 à 20 % en poids, surtout de 1 à 15 % en poids, prioritairement de 2 à 12 % en poids.

9. Utilisation selon l'une des revendications 1 à 8, **caractérisée en ce que,** par rapport à la masse totale de la composition de résine synthétique polymérisable par voie radicalaire, l'activateur ou les activateurs sont présents sous forme d'un sel métallique dans une proportion en poids de 0,01 % en poids, allant de préférence de 0,05 à 5 % en poids.

10. Utilisation selon l'une des revendications 1 à 9, **caractérisée en ce que,** par rapport à la masse totale de la composition de résine polymérisable par voie radicalaire, la proportion en poids de résine(s) réactive(s) dans la composition de résine synthétique polymérisable par voie radicalaire se situe dans la plage allant de 0,1 à 90 % en poids, de préférence de 0,5 à 75 % en poids, plus avantageusement de 1 à 40 % en poids, surtout de 15 à 60 % en poids, prioritairement de 20 à 50 % en poids.

11. Utilisation selon l'une des revendications 1 à 10, **caractérisée en ce que** des diluants réactifs et/ou un ou plusieurs autres ingrédients habituels, en particulier des co-accélérateurs, inhibiteurs, agents thixotropes, charges ou autres additifs, sont ou seront ajoutés à la composition de résine synthétique.

12. Utilisation selon l'une des revendications 1 à 11, dans laquelle la composition de résine synthétique durcissable par voie radicalaire est un kit à plusieurs composants, en particulier un kit à deux composants, qui contient un composant de résine réactive et un composant durcisseur.

13. Compositions de résine synthétique durcissables par voie radicalaire, qui contiennent un accélérateur et/ou un améliorateur du durcissement à coeur et un système durcisseur, dans lesquelles le système durcisseur contient (i) au moins un aldéhyde et/ou une cétone et au moins une amine primaire, (ii) au moins une aldimine ou (iii) au moins une cétimine, ou un mélange de deux ou plus des composants (i) à (iii), et au moins un autre activateur (accélérateur) sous la forme d'un sel métallique en tant que système initiateur pour une composition de résine synthétique contenant des composés polymérisables par voie radicalaire, **caractérisées en ce qu'**il est prévu, en tant qu'accélérateur et/ou améliorateur du durcissement à coeur, au moins un composé spécifique choisi dans le groupe constitué par
(a) des phénols, qui sont **caractérisés en ce qu'**ils portent exactement un groupe OH phénolique par cycle aromatique, ne présentent aucun substituant alkyloxy en position ortho par rapport au groupe OH et ne portent aucun carboxyle sous forme libre ou anionique, aucun -CH₂-N(CH₃)₂ et aucun substituant comprenant un groupe -NH-NH-,
(b) le triphénylephosphite, triphénylphosphine, acide p-toluènesulfonique ou N-isopropyl-N'-phényl-p-phénylènediamine ; et
(c) des composés NH-acides choisis parmi des sulfonamides comportant au moins un H libre sur l'atome d'azote d'amide ; des composés hétérocycliques comportant un cycle à 5 ou 6 atomes cycliques, dont l'un est le -NH- portant l'hydrogène et causant l'acidité NH, et les autres atomes cycliques sont choisis parmi le carbone et/ou jusqu'à un S, dans laquelle les atomes de C et/ou de S voisins du « -NH » portent un ou, dans le cas de S, un ou de préférence deux groupes oxo (=O), dans lesquelles les composés hétérocycliques comportant un cycle peuvent se présenter sous forme de cycles simples ou sous forme benzocondensée ; et des composés aromatiques hétérocycliques comportant 5 ou 6 atomes cycliques, dont l'un est le N portant l'hydrogène et causant l'acidité NH et dont les autres atomes cycliques sont choisis parmi le carbone et au moins deux autres atomes N ;
dans lesquelles des mélanges de deux ou plus desdits « composés spécifiques » peuvent également être utilisés respectivement.
